# EUROPÄISCHE PATENTANMELDUNG

(11) **EP 0 543 336 A1**
(43) Veröffentlichungstag der Anmeldung: **26.05.1993**
(21) Anmeldenummer: 92119624.2
(22) Anmeldetag: 17.11.1992
(51) Int. Cl.: B65G 47/26, B65G 13/07

(54) **Staurollenbahn**

(30) Priorität: 18.11.1991 DE 4137937
(71) Anmelder: KNAPP LOGISTIK AUTOMATION, Ges. m.b.H., A-8042 Graz (AT)
(72) Erfinder: Sittinger, Werner, A-8010 Graz (AT)
(74) Vertreter: Kinzebach, Werner, Dr.

(57) **Zusammenfassung**

Die Erfindung betrifft eine Staurollenbahn mit mindestens einem Stauplatz. Die Staurollenbahn weist senkrecht zur Förderrichtung angeordnete Tragrollen (2) auf, von denen wenigstens ein Teil durch einen unterhalb der Tragrollen (2) verlaufenden Antriebsgurt (8) antreibbar ist. Ein Stauplatz wird durch eine Gruppe benachbarter Tragrollen (2) gebildet, an die der Antriebsgurt (8) mit Hilfe mehrerer verstellbarer Andrückrollen (11) wahlweise angedrückt oder nicht angedrückt werden kann. Die Erfindung ist dadurch gekennzeichnet, daß die Andrückrollen (11) pneumatisch verstellbar sind und daß für jede Andrückrolle (11) ein eigener Stelltrieb in Form eines Pneumatikzylinders (25) vorgesehen ist.

## Beschreibung

Die Erfindung betrifft eine Staurollenbahn mit mindestens einem Stauplatz, wobei die Staurollenbahn senkrecht zur Förderrichtung angeordnete Tragrollen aufweist, von denen wenigstens ein Teil durch einen unterhalb der Tragrollen verlaufenden Antriebsgurt antreibbar ist, und wobei ein Stauplatz durch eine Gruppe benachbarter Tragrollen gebildet wird, an die der Antriebsgurt mit Hilfe mehrerer verstellbarer Andrückrollen wahlweise angedrückt oder nicht angedrückt werden kann.

Rollenbahnen mit angetriebenen Tragrollen haben zum Stetigfördern von Stückgütern eine weite Verbreitung gefunden. Für viele Anwendungen sollen jedoch die Fördergüter nicht nur von einem Ort zum anderen transportiert werden. Vielmehr ist es nötig, im Verlauf des Transports noch Arbeitsschritte an den Gütern vorzunehmen. Ein Beispiel hierfür liegt in Kommissionieranlagen für Kleinstückgüter vor. Hier müssen einzelne Stückgüter aus einem Sortiment von oft mehreren zehntausend Artikeln entnommen werden und in Transportbehälter gefüllt werden, die auf Rollenbahnen laufen. Dabei werden die zu einem Auftrag gehörenden Stückgüter in mehreren Portionen an verschiedenen Stellen in die Behälter eingebracht. Nach Vervollständigung eines Kommissionierauftrags muß der Inhalt der Behälter auf Vollständigkeit überprüft und ggf. ergänzt werden. In der Regel wird jedem Behälter ein Lieferschein beigelegt. Bei allen diesen Arbeitsschritten ist es nötig, den betreffenden Behälter und auch ggf. nachfolgende Behälter in geordneter Weise anzuhalten und nach Erledigung des Arbeitsschritts weiterzubefördern.

Zu diesem Zweck werden sogenannte Staurollenbahnen eingesetzt. Der Antrieb der Tragrollen erfolgt dabei durch einen unterhalb der Rollen umlaufenden Gurt. Jeweils zwischen zwei benachbarten Tragrollen ist eine bauchige Andrückrolle vorgesehen, die den Gurt von unten gegen die Tragrollen drückt und so eine reibschlüssige Verbindung zwischen dem Gurt und den zwei benachbarten Tragrollen herstellt. Das Anhalten von Fördergütern kann an sogenannten Stauplätzen erfolgen. An einem solchen Stauplatz sind zwei oder mehrere benachbarte Andrückrollen gemeinsam in einem schwenkbaren Rahmen gelagert. Die Verschwenkung dieses Rahmens erfolgt mit Hilfe eines elektromechanischen Antriebs. Soll ein Fördergut über den Stauplatz transportiert werden, so wird der Rahmen mit den Andrückrollen von unten gegen den Gurt und die Tragrollen gedrückt. Soll das Fördergut am Stauplatz anhalten, so wird der Rahmen mit den Andrückrollen nach unten vom Gurt abgehoben. Dadurch wird die reibschlüssige Verbindung zwischen Gurt und Tragrollen aufgehoben, und die Tragrollen des Stauplatzes werden nicht mehr angetrieben.

Die Zusammenfassung mehrerer Antriebrollen in einem schwenkbaren Rahmen bei der beschriebenen bekannten Staurollenbahn hat verschiedene Nachteile: Zum einen kann ein derartiges Andrückelement mit mehreren Andrückrollen in einem Rahmen nur jeweils für einen Rollenbahntyp mit einem bestimmten Tragrollenabstand verwendet werden. Für jeden verwendeten Tragrollenabstand muß daher ein speziell diesem Abstand angepaßtes Andrückelement vorgesehen werden. Die bekannten Andrückelemente sind somit nicht im Rahmen eines modular aufgebauten Rollenbahnsystems einsetzbar. Der gemeinsame Rahmen, die Schwenkachse für den Rahmen und die Halterung für die Schwenkachse müssen relativ stabil und präzise aufgebaut sein, und sind daher in der Herstellung kostenaufwendig. Beim Zusammenbau der Rollenbahn müssen diese Teile genau justiert werden.

Entsprechend aufwendig ist auch die Wartung und ein Auswechseln dieser Teile. Darüberhinaus ist auch die Verwendung eines elektromechanischen Antriebs für das Andrückelement relativ kostenaufwendig.

Es ist daher Aufgabe der Erfindung, ausgehend von diesem Stand der Technik eine Staurollenbahn zu schaffen, die in Herstellung und Betrieb kostengünstiger ist, einfacher zusammengebaut, justiert und gewartet werden kann und für verschiedene Tragrollenabstände gleichermaßen geeignet ist.

Diese Aufgabe wird mit einer Staurollenbahn nach dem Oberbegriff des Anspruchs 1 gelöst, die dadurch gekennzeichnet ist, daß die Andrückrollen pneumatisch verstellbar sind und für jede Andrückrolle ein eigener Stelltrieb in Form eines Pneumatikzylinders vorgesehen ist.

Vorzugsweise erfolgt die Steuerung und Betätigung der Staurollenbahn rein pneumatisch. Dazu ist an jedem Stauplatz mindestens ein auf die Anwesenheit eines Förderguts ansprechender Fühler vorgesehen, der mindestens ein Pneumatikventil für die Pneumatikzylinder betätigt. Bei einer bevorzugten Ausführungsform ist der Fühler als berührungslos arbeitender elektronischer Fühler ausgebildet. Vorzugsweise umfaßt der elektronische Fühler einen Lichtsender und einen Lichtempfänger, die vorteilhaft im Infrarot-Bereich arbeiten. Der Lichtempfänger ist vorteilhaft mit einem Filter für Infrarot-Licht versehen, und damit gegen Fremdlicht aus dem sichtbaren Bereich weitgehend unempfindlich. In einer anderen bevorzugten Ausführungsform umfaßt der Fühler eine Schaltfahne, die in einer zu den Tragrollen parallelen Achse schwenkbar gelagert ist, wobei die Schaltfahne über die Oberkante der Tragrollen herausragt und mit mindestens einem Magneten versehen ist, und wobei das (die) Pneumatikventil(e) durch den (die) Magnet(en) berührungslos betätigbar ist (sind). Vorzugsweise betätigt der Fühler zwei gesonderte Pneumatikventile; dabei ist für jeden Stauplatz der Staurollenbahn oder eines Abschnitts der Staurollenbahn ein pneumatisches ODER-Glied mit zwei Eingängen und einem Ausgang vorgesehen, wobei ein Eingang mit dem ersten Pneumatikventil des Stauplatzes verbunden ist, der andere Eingang mit dem zweiten Pneumatikventil des in Förderrichtung folgenden Stauplatzes verbunden ist, und der Ausgang mit allen Pneumatikzylindern des Stauplatzes verbunden ist.

Vorteilhaft ist die Andrückrolle zusammen mit dem zugehörigen Pneumatikzylinder zwischen zwei benachbarten Tragrollen angeordnet. Vorzugsweise ist die Andrückrolle an einem Hebel gelagert, der um eine parallel zur Förderrichtung liegende Achse schwenkbar ist; der Pneumatikzylinder wirkt zwischen dem Hebel und dem Rahmen der Staurollenbahn. Vorteilhaft ist der Pneumatikzylinder ein einfach wirkender Zylinder und es ist eine Feder zwischen dem Hebel und dem Rahmen vorgesehen, die der Verstellung des Hebels durch den Pneumatikzylinder entgegenwirkt. Vorzugsweise wird bei einem Druckbeaufschlagung des Pneumatikzylinders die Antriebsrolle an die benachbarten Tragrollen gedrückt. Der Hebel ist dabei vorzugsweise als zweiarmiger Hebel ausgebildet, wobei die Andrückrolle an einem Arm des Hebels gelagert ist und die Feder und der Pneumatikzylinder an dem anderen Arm des Hebels angreifen. Vorteilhaft ist der Pneumatikzylinder so angeordnet, daß seine Achse im wesentlichen parallel zum Hebel verläuft. Vorzugsweise ist an dem anderen Arm des Hebels je eine Bremsplatte für die benachbarten Tragrollen vorgesehen.

Wie die vorstehenden Ausführungen zeigen, hat die erfindungsgemäße Staurollenbahn den Vorteil, durch die Verwendung von Andrückrollen mit gesonderten pneumatischen Stelltrieben billiger in Herstellung, Aufbau und Betrieb zu sein und für verschiedene Tragrollenabstände gleichermaßen einsetzbar zu sein. Die Andrückelemente mit gesonderten Stelltrieben können einfacher ein- und ausgebaut, justiert und gewartet werden.

Anhand der nachfolgenden Figuren werden nun beispielhafte Ausführungsformen der erfindungsgemäßen Staurollenbahn näher beschrieben. Hierbei zeigen:
- Figur 1: einen Stauplatz einer Staurollenbahn im Querschnitt mit senkrecht zu den Tragrollen liegender Schnittebene;
- Figur 2: ein Andrückelement des Stauplatzes der Figur 1 in einem Querschnitt mit Schnittebene senkrecht zur Förderrichtung (Schnitt entlang der Linie A-A in Figur 1);
- Figur 3: ein mechanisches Fühlerelement des Stauplatzes der Figur 1 im Querschnitt mit Schnittebene senkrecht zur Förderrichtung (Schnitt entlang der Linie B-B in Figur 1);
- Figur 4: das Fühlerelement der Figur 3 in einem Querschnitt mit Schnittebene senkrecht zu den Tragrollen;
- Figur 5: eine andere Ausführungsform des Fühlerelements der Figur 3, und zwar ein berührungsfrei arbeitendes, elektronisches Fühlerelement, und
- Figur 6: einen Plan einer hydraulischen Schaltung zum Steuern und Betätigen einer Steuerrollenbahn mit Stauplätzen gemäß Figur 1.

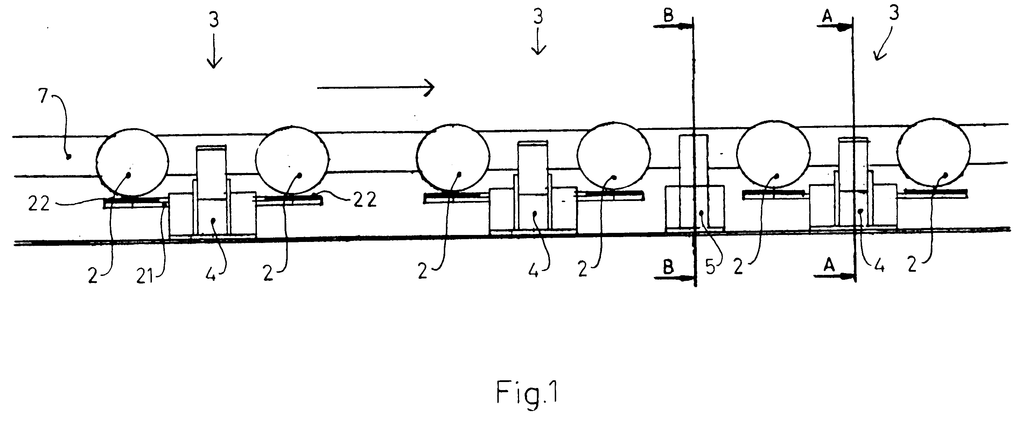

In Figur 1 ist ein Ausschnitt einer Staurollenbahn gezeigt, und zwar ein Stauplatz 1 mit Tragrollen 2. Die Staurollenbahn setzt sich zu beiden Seiten hin mit weiteren nicht gezeigten Tragrollen fort. Die Tragrollen sind parallel zueinander angeordnet und spannen eine horizontale oder leicht geneigte Ebene auf. Die Tragrollen sind antreibbar, wobei die zum Stauplatz 1 gehörenden Tragrollen 2 vom Antrieb gelöst und gebremst werden können. Die Förderrichtung der Staurollenbahn ist in Figur 1 durch einen Pfeil gekennzeichnet. Die Staurollenbahn weist vor und hinter dem gezeigten Stauplatz 1 weitere nicht gezeigte Stauplätze auf. Diese können entweder unmittelbar oder unter Zwischenschaltung von Abschnitten mit permanent angetriebenen Tragrollen an den gezeigten Stauplatz 1 anschließen.

Der Stauplatz 1 umfaßt sechs Tragrollen 2, die drei Tragrollen-Paare 3 bilden. Jeweils mittig zwischen den beiden Tragrollen 2 eines Paares 3 ist ein Andrückelement 4 angeordnet. In dem in Förderrichtung hinteren Zwischenraum zwischen den drei Paaren 3 ist mittig ein Fühlerelement 5 vorgesehen. Die Staurollenbahn ist modular aufgebaut; die Zahl der zu einem Stauplatz gehörenden Tragrollenpaare kann daher in Abhängigkeit von der größten Länge der Fördergüter beliebig gewählt werden, wobei jeweils ein Fühlerelement pro Stauplatz ausreichend ist. Nicht dargestellt in Figur 1 ist der Antrieb der Tragrollen 2.

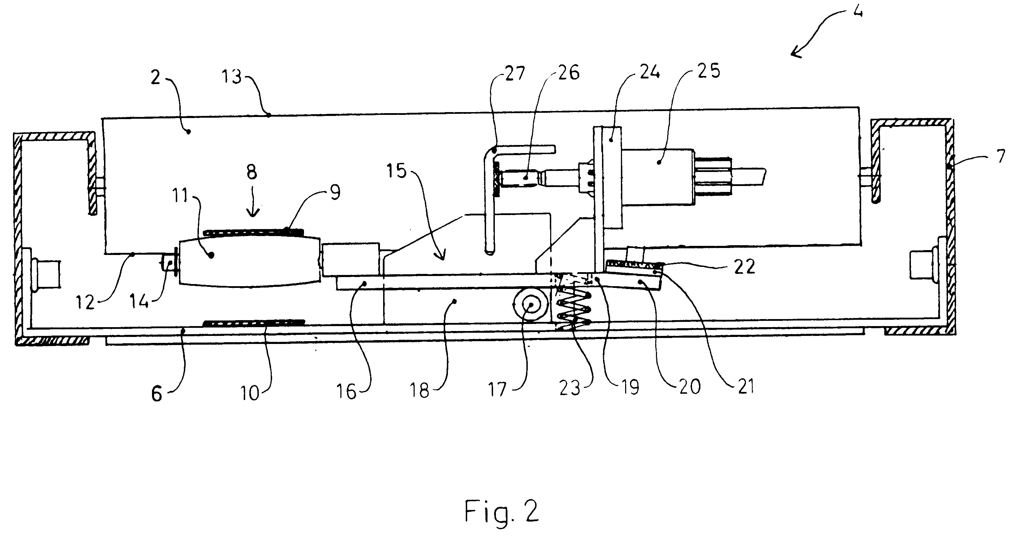

Die Staurollenbahn weist einen trogförmigen Rahmen auf, der aus einem den Boden des Trogs bildenden Grundrahmen 6 und daran seitlich befestigten, nach oben gerichteten Rahmenwangen 7 gebildet wird (siehe Figur 2). An den Rahmenwangen 7 sind die Tragrollen 2 mit ihrem Achsen gelagert. Die Andrückelemente 4 sind auf dem Grundrahmen 6 befestigt. Ein Antriebsgurt 8 läuft parallel zur Förderrichtung in dem Zwischenraum zwischen den Tragrollen 2 und dem Grundrahmen 6 um. Das untere Trum 9 des Antriebsgurts 8 läuft leer in Förderrichtung auf dem oder knapp über dem Grundrahmen 6. Das gegen die Förderrichtung verlaufende obere Trum 10 des Antriebsgurts 8 wird am Ort eines Andrückelements 4 von einer bauchigen Andrückrolle 11 nach oben gedrückt, und zwar über die Unterkante 12 der Tragrollen 2. Dadurch liegt das obere Trum 10 reibschlüssig jeweils an den beiden Tragrollen 2 eines Paares 3 an. Die lineare Bewegung des Antriebsgurts 8 wird so in eine Drehbewegung der Tragrollen 2 umgesetzt.

Das in Figur 2 dargestellte Andrückelement ist in dem Zwischenraum zwischen den Tragrollen 2 des Paares 3 angeordnet, und reicht fast bis an die Oberkante 13 der Tragrollen 2 heran.

Durch diese Anordnung ist es möglich, das Andrückelement 4 nicht nach unten aus dem Grundrahmen 6 ragen zu lassen, und dadurch die Staurollenbahn in einer extrem flachen Bauweise auszuführen. Die Bauhöhe, die gegeben ist durch den Abstand zwischen der Unterkante des Grundrahmens 6 und der Oberkante 12 der Tragrollen 2, kann so weniger als das Doppelte des Durchmessers der Tragrolle 2 betragen.

Das Andrückelement 4 umfaßt einen zweiarmigen Wipphebel 15 mit einem langen Arm 16 und einem kurzen Arm 19. Der Wipphebel 15 ist unterhalb der Unterkante 12 der Tragrollen 2 schwenkbar um eine Schwenkachse 17 angeordnet. Die Schwenkachse 17 ist parallel zur Förderrichung ausgerichtet und befindet sich unmittelbar über dem Grundrahmen 6. Sie ist in zwei Achsschilden 18 gelagert, die stehend auf dem Grundrahmen 6 angeordnet sind.

Fest verbunden mit dem Wipphebel 15 ist eine Achse 14 für die Andrückrolle 11. Die Achse 14 ist parallel zum Wipphebel 15 gerichtet und bildet die Fortsetzung des langen Arms 16 nach außen. Die Andrückrolle 11 ist auf der Achse 14 drehbar gelagert. Der andere, kurze Arm 19 des zweiarmigen Wipphebels 15 ist an einem Abschnitt 20 an seinem äußeren Ende nach unten geneigt ausgebildet. Auf dem geneigten Abschnitt 20 ist quer zum Wipphebel 15 eine Traverse 21 angeordnet. Die Traverse 21 erstreckt sich von dem mittig zwischen den beiden Tragrollen 2 des Paares 3 angeordneten Andrückelement 4 nach beiden Seiten bis unter die Tragrollen 2 des Paares 3 (siehe Figur 1). An den Enden der Traverse 21, ist jeweils ein Bremsbelag 22 befestigt. Die Neigung des Abschnitts 20 ist so gewählt, daß, wenn der Wipphebel 15 soweit geschwenkt wird, daß die Bremsbeläge 22 die darüberliegenden Tragrollen des Paares 3 berühren, die Bremsbeläge 22 parallel zu den Achsen der Tragrollen 2 ausgerichtet sind.

Zwischen dem kurzen Arm 19 und dem Grundrahmen 6 ist eine schraubenförmige Bremsfeder 23 angeordnet. Die Bremsfeder 23 beaufschlagt den Wipphebel 15 in die Drehrichtung, in der die Bremsbeläge 22 gegen die Tragrollen 2 gedrückt werden und die Andrückrolle 11 nach unten von den Tragrollen 2 weggezogen werden.

Fest verbunden mit dem kurzen Arm 19 des Wipphebels 15 ist ein Pneumatikzylinder 25. Die Verbindung wird durch einen Zylinderhalter 24 vermittelt, der sich von dem kurzen Arm 19 nach oben erstreckt. Der Pneumatikzylinder 25 ist ein einfach wirkender Zylinder mit Rückzugsfeder. Die Achse des Pneumatikzylinders 25, und damit die Kolbenstange 26, ist parallel zum Wipphebel 15 angeordnet. Die Kolbenstange 26 ist mit einem nicht gezeigten Kolben des Pneumatikzylinders 25 fest verbunden und stützt sich mit ihrem der Andrückrolle 11 zugewandten Ende gegen einen Anschlag 27 ab. Der Anschlag 27 ist wiederum fest mit dem Lagerschild 18 und darüber mit dem Grundrahmen 6 verbunden.

Das beschriebene Andrückelement kann einfachst an verschiedene Tragrollenabstände angepaßt werden. Hierzu ist es nur nötig, die Länge der Traverse 21 entsprechend dem Tragrollenabstand zu wählen, und die einzelnen Andrückelement im doppelten Tragrollenabstand auf dem Grundrahmen 6 zu befestigen.

Der Antrieb des Tragrollenpaars 3 wird auf folgende Weise mit dem Andrückelement 4 gesteuert: In Bremsstellung ist der Pneumatikzylinder 25 nicht druckbeaufschlagt. Die Bremsfeder 23 drückt dann die Bremsbeläge 22 gegen die Tragrollen 2 des Paares 3. Die Andrückrolle 11 ist nach unten von der Tragrolle 2 abgehoben, so daß der permanent umlaufende Antriebsgurt 8 keine reibschlüssige Verbindung zu den Tragrollen 2 eingeht. Die Tragrollen 2 des Paares 3 sind somit in Ruhe und gegen Drehung gehemmt. Um in die Antriebsstellung zu gelangen, beaufschlagt man den der Andrückrolle 11 abgewandten Druckraum des Pneumatikzylinders 25 mit Druckluft. Dadurch wird die Kolbenstange 26 gegen den mit dem Grundrahmen 6 fest verbundenen Anschlag 27 gedrückt. Dies bewirkt, daß der Wipphebel 15 gegen die Kraft der Bremsfeder 23 geschwenkt wird, bis die Andrückrolle 11 den Gurt 8 gegen die Tragrollen 2 preßt. Die Bremsbeläge 22 sind dann von den Tragrollen 2 abgehoben. Die Tragrollen 2 werden so von dem Gurt 8 in Drehung versetzt. Hebt man die Druckbeaufschlagung des Pneumatikzylinders auf, so schwenkt der Wipphebel 15 unter der Wirkung der Bremsfeder 13 in die andere Richtung, bis wieder die oben beschriebene Bremsstellung eingenommen wird.

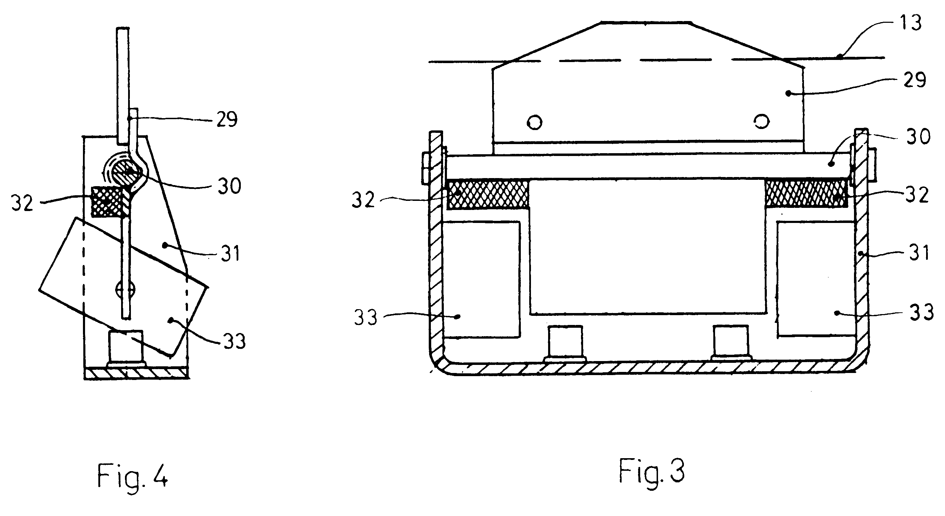

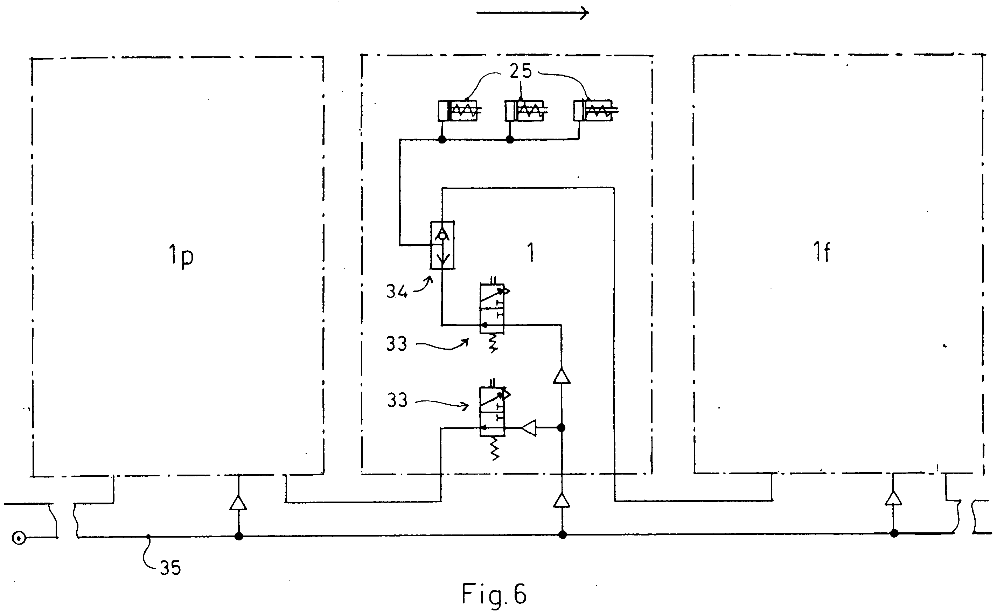

Diese Steuerung des Antriebs der Tragrollen 2 des Stauplatzes 1 erfolgt automatisch durch auf der Staurollenbahn befindliches Fördergut. Hierzu ist jeder Stauplatz mit einem Fühlerelement versehen. Bei dem mechanisch vom Fördergut betätigten Fühlerelement 5 der Figuren 3 und 4 ist eine schwenkbare Schaltfahne 29 vorgesehen, die mit ihrem oberen Rand über die Oberkante 13 der Tragrollen 2 ragt. Die Schaltfahne 29 weist in ihrem mittleren Bereich eine Achse 30 auf, die parallel zu den Tragrollen 2 orientiert ist und in einem U-förmigen Halter 31 an den Schenkeln des "U" gelagert ist. Die Basis des "U" ist an dem Grundrahmen 6 befestigt. Nahe unterhalb der Achse 30 ist an beiden Außenseiten der Schaltfahne 29 je ein Schaltmagnet 32 angeordnet, bei dem es sich um einen Permanentmagnet handelt. Jeder Schaltmagnet 32 kommuniziert mit einem durch Näherung eines Magneten berührungslos betätigbaren Pneumatikschalter 33, der knapp unterhalb am Halter 31 befestigt ist. Die beiden Pneumatikschalter 33 sind unabhängig voneinander und haben jeweils einen Eingang, einen Ausgang und eine Entlüftungsöffnung. Der Eingang ist permanent mit Druckluft aus einer Druckluft-Speiseleitung 35 (Fig. 6) beaufschlagt. Der Ausgang ist, wie im folgenden noch näher erläutert wird, mit den Druckräumen der Pneumatikzylinder über ein pneumatisches ODER-Glied 34 (Fig. 6) verbunden. Befindet sich der Schaltmagnet 32 in einer entfernten Stellung vom Pneumatikschalter 33, so ist der Ausgang mit dem Eingang verbunden. Nähert man den Schaltmagnet 32 dem Pneumatikschalter 33, so wird bei einer bestimmten Entfernung der Pneumatikschalter 33 betätigt, derart, daß der Ausging vom Eingang getrennt und mit der Entlüftungsöffnung verbunden wird. Die Pneumatikschalter 34 sind in einer geneigten Stellung am Halter 31 befestigt, derart, daß sie bei senkrechtstehender oder gegen die Förderrichtung geneigter Schaltfahne 29 nicht ansprechen. Wird die Schaltfahne 29 in Förderrichtung geneigt, so nähern sich die Schaltmagneten 32 den Pneumatikschaltern 33 und betätigen diese, ohne sie zu berühren. Der Schwerpunkt der Schaltfahne 29 liegt unterhalb der Achse 30; die Schaltfahne 29 richtet sich daher selbsttätig in die senkrechte Stellung auf.

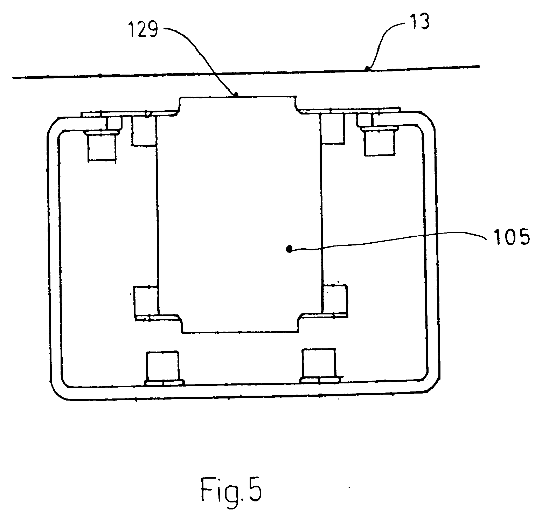

Alternativ zu dem mechanischen Fühlerelement 5 kann auch das in Figur 5 gezeigte elektronische Fühlerelement 105 verwendet werden. Es weist knapp unterhalb der Oberkante 13 der Tragrollen 2 einen Sensor 129 auf, der ein elektrisches Steuersignal abgibt, wenn sich über ihm ein Fördergut befindet, ohne dabei das Fördergut zu berühren. Die Arbeitsweise des Sensors 129 beruht auf der Reflexion einer elektromagnetischen Welle, und zwar Infrarot-Lichts am Fördergut. Dazu weist der Sensor 129 eine Infrarot-Lichtquelle und einen infrarotempfindlichen Lichtempfänger auf, z.B. eine Photodiode und einen Phototransistor. Der Lichtempfänger ist mit einem Filter versehen, das nur Licht im Spektralbereich des von der Quelle emittierten Lichts durchläßt. Falls sich ein Fördergut über dem Sensor 129 befindet, wird von ihm das von der Lichtquelle ausgesendete Licht reflektiert, und vom Lichtempfänger nachgewiesen. Alternativ kann die Arbeitsweise des Sensors 129 auch auf der Veränderung eines statischen oder quasi-statischen elektrischen Felds durch die Anwesenheit eines Förderguts, oder auf der Reflexion einer akustischen Welle am Fördergut beruhen. Dabei wird das elektrische Feld bzw. die akustische Welle vom Fühlerelement 129 selbst erzeugt, und das veränderte Feld bzw. die reflektierte Welle vom Sensor 129 aufgenommen. Die Änderung des elektrischen Felds, bedingt durch die, kapazitative Kopplung mit dem Fördergut, kann sehr genau durch die Verstimmung eines Schwingkreises festgestellt werden, wobei das Fördergut die Kapazität des Schwingkreises verändert. Bei der akustischen Welle kann es sich um Ultraschall handeln. Wie beim magnetischen Fühlerelement 5 betätigt das elektronische Fühlerelement 105 zwei unabhängige Pneumatikschalter 33, deren Eingang und Ausgang verbunden ist, wenn sich kein Fördergut über dem Fühlerelement 105 befindet.

Bei beiden Ausführungsformen des Fühlerelements 5 bzw. 105 wird somit die An- oder Abwesenheit eines Förderguts am Stauplatz 1 am Ort des Fühlerelements 5 bzw. 105 unmittelbar mit Hilfe der Pneumatikschalter 33 in ein pneumatisches Signal umgesetzt. Die gesamte Steuerung und Betätigung der Staurollenbahn erfolgt von da an ausschließlich auf pneumatischem Weg, ohne Zuhilfenahme irgendwelcher nicht-pneumatischer Verbindungs-, Steuer- oder Betätigungselemente. Dabei erfolgt die Steuerung der Staurollenbahn durch die auf der Rollenbahn befindlichen Fördergüter selbst. Dazu ist an jedem Stauplatz ein pneumatisches ODER-Glied 34 vorgesehen, das zwei Eingänge und einen Ausgang aufweist.

In Figur 6 ist der hydraulische Schaltplan zum Steuern und Betätigen des Stauplatzes 1 der Staurollenbahn gezeigt. In der Figur sind auch der, in Förderrichtung gesehen, vorhergehende Stauplatz 1p und der folgende Stauplatz 1f dargestellt, wobei die Förderrichtung durch einen Pfeil gekennzeichnet ist. Die zu den einzelnen Stauplätzen 1, 1f, 1p gehörigen Teil-Schaltpläne sind jeweils identisch. Aus diesem Grund ist in Figur 6 nur der Teil-Schaltplan des Stauplatzes 1 detailliert dargestellt; auch die folgende Erläuterung beschränkt sich daher auf den Stauplatz 1. Vor dem vorhergehenden Stauplatz 1p und nach dem folgenden Stauplatz 1f sind weitere, identisch mit den gezeigten Stauplätzen 1, 1f, 1p verschaltete (nicht gezeigte) Stauplätze vorgesehen.

Der Stauplatz 1 umfaßt zwei hydraulische Schalter 33, die durch Wegeventile gebildet werden, und ein hydraulisches ODER-Glied 34, das durch ein Doppel-Rückschlagventil gebildet wird. Bei den Wegeventilen 33 handelt es sich um 3/2-Wegeventile, d.h. um Ventile, die jeweils zwei verschiedene Stellungen einnehmen können und jeweils drei Anschlüsse aufweisen. Bei dem ersten Anschluß handelt es sich um den Eingang, bei dem zweiten Anschluß um den Ausgang, und bei dem dritten Anschluß um eine Entlüftungsöffnung zur Atmosphere. In Ruhestellung (d.h. in derjenigen Stellung, die das Wegeventil bei Abwesenheit eines Förderguts an dem angehörigen Stauplatz einnimmt, wie in Figur 6 gezeigt) kommuniziert der Eingang mit dem Ausgang; die Entlüftungsöffnung ist dabei verschlossen. In Betätigungsstellung (d.h. in derjenigen Stellung, die das Wegeventil in Anwesenheit eines Förderguts am zugehörigen Stauplatz einnimmt) ist der Eingang verschlossen; der Ausgang kommuniziert dann mit der Entlüftungsöffnung. Die Betätigung der Wegeventile 33 erfolgt, wie oben beschrieben, mit Hilfe des Fühlerelements 5 oder 105. Nach Betätigung kehren die Wegeventile 33 unter der Wirkung einer Feder selbsttätig in die Ruhestellung zurück. Das Doppel-Rückschlagventil 34 weist zwei Eingänge und einen Ausgang auf. Die Wirkungsweise des Doppel-Rückschlagventils 34 ist derart, daß in jedem Fall einer der beiden Eingänge mit dem Ausgang kommuniziert und jeweils der andere Eingang geschlossen ist. Falls an den beiden Eingängen gleiche Drücke anliegen (dies umfaßt auch den Fall, daß an keinem der Eingänge ein (Über-)Druck anliegt) ist es beliebig, welcher der beiden Eingänge mit dem Ausgang kommuniziert. Falls an den beiden Eingängen verschiedene Drücke anliegen, kommuniziert derjenige Eingang mit dem Ausgang, an dem der höhere Druck anliegt.

Mit dem Ausgang des ODER-Glieds 34 sind die Druckräume der Pneumatikzylinder 25 des Stauplatzes verbunden, wobei alle Pneumatikzylinder 25 eines Stauplatzes parallel geschaltet sind. Ein Eingang des ODER-Glieds 34 ist mit dem Ausgang eines der beiden Pneumatikschalter 33 des betrachteten Stauplatzes verbunden. Der andere Eingang des ODER-Glieds 34 ist mit dem Ausgang des anderen der beiden Pneumatikschalter 33 des in Förderrichtung nachfolgenden Stauplatzes verbunden. Entsprechend ist der Ausgang des anderen Pneumatikschalters 33 des betrachteten Stauplatzes zu dem in Förderrichtung vorherliegenden Stauplatz geführt und mit einem der Eingänge des dortigen ODER-Glieds 34 verbunden.

Betrachtet man nur einen Stauplatz 1 (genannt "erster Stauplatz") und den in Förderrichtung folgenden Stauplatz 1f (genannt "zweiter Stauplatz"), so sind insgesamt vier verschiedene Betriebszustände möglich (dabei nimmt man zunächst an, daß der auf den zweiten Stauplatz 1f folgende Stauplatz besetzt ist):
A. Beide Stauplätze 1,1f sind unbesetzt. Die Pneumatikschalter 33 beider Stauplätze verbinden ihre Eingänge mit ihren Ausgängen, folglich sind am ersten Stauplatz 1 beide Eingänge und am zweiten Stauplatz 1f ein Eingang des ODER-Glieds 34 druckbeaufschlagt. Somit sind die Pneumatikzylinder 25 beider Stauplätze 1, 1f druckbeaufschlagt und drücken den Gurt 8 gegen die Tragrollen 2 an. Beide Stauplätze 1,1f sind also in Antriebsstellung.
B. Ein Transportbehälter wird zum ersten Stauplatz 1 geführt. Der erste Stauplatz 1 ist besetzt, der zweite Stauplatz 1f unbesetzt. Die Pneumatikschalter 33 des ersten Stauplatzes 1 verbinden ihre Ausgänge mit der Atmosphäre. Folglich ist ein Eingang des ODER-Glieds 34 des ersten Stauplatzes 1 nicht mehr druckbeaufschlagt. Da aber der andere, mit dem zweiten Stauplatz 1f verbundene Eingang nach wie vor druckbeaufschlagt ist, ändert sich im Ergebnis nichts gegenüber dem Betriebszustand A; der Transportbehälter wird über den Stauplatz 1 bis zum zweiten Stauplatz 1f befördert.
C. Nun ist der zweite Stauplatz 1f besetzt, und der erste Stauplatz 1 unbesetzt. Dies führt dann dazu, daß beide Eingänge des ODER-Glieds 34 des zweiten Stauplatzes 1f und damit der dortige Pneumatikzylinder 25 nicht druckbeaufschlagt sind. Damit ist der zweite Stauplatz 1f im Bremszustand, und der Behälter bleibt dort stehen. Beim ersten Stauplatz 1 liegt hingegen an dem mit dem eigenen Pneumatikschalter 33 verbundenen Eingang des ODER-Glieds 34 wieder Druck an, entsprechend befindet sich der erste Stauplatz 1 im Antriebszustand.
D. Ein zweiter Transportbehälter wird zum ersten Stauplatz 1 herangeführt. Nun sind beide Stauplätze 1, 1f besetzt, und beide Eingänge der ODER-Glieder 34 beider Stauplätze 1,1f sind nicht mehr druckbeaufschlagt. Entsprechend den Ausführungen unter C kommt daher auch der erste Stauplatz 1 in den Bremszustand; der zweite Transportbehälter bleibt auf dem ersten Stauplatz 1 stehen. Löst man nun den "Stau" auf, etwa indem man den auf den zweiten Stauplatz 1f folgenden Stauplatz freimacht, so wird ein Eingang des ODER-Glieds 34 des zweiten Stauplatzes 1f druckbeaufschlagt. Dadurch wird der zweite Stauplatz 1f in den Antriebszustand gebracht und der dort angehaltene Behälter wird weggeführt. Es liegt dann Betriebszustand B vor; der auf dem ersten Stauplatz 1 wartende Behälter rückt zum zweiten Stauplatz 1f nach.

Mit dieser Art von Verkettung können auf einfachste Weise beliebig viele Stauplätze aneinandergereiht werden und in die automatische Stauplatz-Steuerung einbezogen werden.

## Patentansprüche

1. Staurollenbahn mit mindestens einem Stauplatz, wobei die Staurollenbahn senkrecht zur Förderrichtung angeordnete Tragrollen aufweist, von denen wenigstens ein Teil durch einen unterhalb der Tragrollen verlaufenden Antriebsgurt antreibbar ist, und wobei ein Stauplatz durch eine Gruppe benachbarter Tragrollen gebildet wird, an die der Antriebsgurt mit Hilfe mehrerer verstellbarer Andrückrollen wahlweise angedrückt oder nicht angedrückt werden kann,
**dadurch gekennzeichnet,** daß die Andrückrollen (11) pneumatisch verstellbar sind und für jede Andrückrolle (11) ein eigener Stelltrieb in Form eines Pneumatikzylinders (25) vorgesehen ist.

2. Staurollenbahn nach Anspruch 1, dadurch gekennzeichnet, daß an jedem Stauplatz (2) mindestens ein auf Anwesenheit eines Förderguts ansprechender Fühler (5,105) vorgesehen ist, der mindestens ein Pneumatikventil (33) für die Pneumatikzylinder (25) betätigt.

3. Staurollenbahn nach Anspruch 2, dadurch gekennzeichnet, daß der Fühler (5) eine Schaltfahne (29) umfaßt, die in einer zu den Tragrollen (2) parallelen Achse (30) schwenkbar gelagert ist, wobei die Schaltfahne (29) über die Oberkante (13) der Tragrollen (2) herausragt und mit mindestens einem Magneten (32) versehen ist, und wobei das (die) Pneumatikventil(e) (33) berührungslos durch den (die) Magnet(en) (32) betätigbar ist (sind), oder daß der Fühler (105) als berührungslos arbeitender elektronischer Fühler ausgebildet ist.

4. Staurollenbahn nach Anspruch 3 mit berührungslos arbeitendem Fühler (105), dadurch gekennzeichnet, daß der Fühler (105) einen Lichtsender und einen Lichtempfänger umfaßt, wobei vorzugsweise Lichtsender und -empfänger im Infrarot-Bereich arbeiten, und, besonders vorzugsweise, der Lichtempfänger mit einem Filter für Infrarot-Licht versehen ist.

5. Staurollenbahn nach einem der Ansprüche 2 - 4, dadurch gekennzeichnet, daß der Fühler (5, 105) zwei gesonderte Pneumatikventile (33) betätigt und
daß für jeden Stauplatz (2) der Staurollenbahn oder eines Abschnitts der Staurollenbahn ein pneumatisches ODER-Glied (34) mit zwei Eingängen und einem Ausgang vorgesehen ist, wobei ein Eingang des ODER-Glieds (34) mit dem ersten Pneumatikventil (33) des Stauplatzes (2) verbunden ist, der andere Eingang des ODER-Glieds (34) mit dem zweiten Pneumatikventil (33) des in Förderrichtung nachfolgenden Stauplatzes verbunden ist und der Ausgang des ODER-Glieds (34) mit allen Pneumatikzylindern (25) des Stauplatzes (2) verbunden ist.

6. Staurollenbahn nach einem der vorhergehenden Ansprüche, dadurch gekennzeichnet, daß die Andrückrolle (11) zusammen mit dem zugehörigen Pneumatikzylinder (25) zwischen zwei benachbarten Tragrollen (2) angeordnet ist.

7. Staurollenbahn nach einem der vorhergehenden Ansprüche, dadurch gekennzeichnet, daß die Andrückrolle (11) an einem Hebel (15) gelagert ist, der um eine parallel zur Förderrichtung liegende Achse (17) schwenkbar ist, und daß der Pneumatikzylinder (25) zwischen dem Hebel (15) und einem Rahmen (6) der Staurollenbahn wirkt.

8. Staurollenbahn nach Anspruch 7, dadurch gekennzeichnet, daß der Pneumatikzylinder (25) ein einfach wirkender Zylinder ist, und eine Feder (23) zwischen dem Hebel (15) und dem Rahmen (6) vorgesehen ist, die der Verstellung des Hebels (15) durch den Pneumatikzylinder (25) entgegenwirkt, und
daß vorzugsweise die Antriebsrolle (11) den Antriebsgurt (8) bei Druckbeaufschlagung des Pneumatikzylinders (25) an die benachbarte(n) Tragrolle(n) (2) drückt.

9. Staurollenbahn nach Anspruch 7 oder 8, dadurch gekennzeichnet, daß der Hebel (15) als zweiarmiger Hebel ausgebildet ist, wobei die Andrückrolle (11) an einem Arm (16) des Hebels (15) gelagert ist und die Feder (23) und der Pneumatikzylinder (25) an dem anderen Arm (19) des Hebels (15) angreifen, und
daß vorzugsweise der Pneumatikzylinder (25) so angeordnet ist, daß seine Achse im wesentlichen parallel zum Hebel (15) verläuft.

10. Staurollenbahn nach Anspruch 9, dadurch gekennzeichnet, daß an dem anderen Arm (19) des Hebels (15) (je) eine Bremsplatte (22) für die benachbarte(n) Tragrolle(n) (2) vorgesehen ist.
